# EUROPÄISCHE PATENTSCHRIFT

(11) **EP 3 781 869 B1**
(45) Veröffentlichungstag und Bekanntmachung des Hinweises auf die Patenterteilung: **01.05.2024**
(21) Anmeldenummer: 19720078.5
(22) Anmeldetag: 16.04.2019
(51) Int. Cl.: F24C 7/08

(54) **EINRICHTUNGSELEMENT MIT BEDIENTEIL**
DEVICE ELEMENT COMPRISING AN OPERATING COMPONENT
ÉLÉMENT D'ÉQUIPEMENT AVEC ORGANE DE COMMANDE

(30) Priorität: 16.04.2018 DE 102018108963
(43) Veröffentlichungstag der Anmeldung: 24.02.2021
(73) Patentinhaber: Bulthaup GmbH & Co. KG, 84155 Bodenkirchen (DE)
(72) Erfinder: ECKERT, Marc Oliver, 84155 Bodenkirchen (DE); SPOHDE, Ulrich, 84155 Bodenkirchen (DE)
(74) Vertreter: Herrmann, Uwe
(86) Internationale Anmeldenummer: PCT/EP2019/059831
(87) Internationale Veröffentlichungsnummer: WO 2019/201941

(56) Entgegenhaltungen:
- EP-A1- 2 527 747
- EP-A1- 3 171 233
- WO-A1-2005/038350
- DE-A1-102010 062 578

## Beschreibung

Die vorliegende Erfindung betrifft ein Küchenmöbel mit wenigstens einem Einrichtungselement, wobei das Einrichtungselement eine Arbeitsfläche und ein Bedienteil aufweist, wobei das Einrichtungselement ausgeführt ist, wenigstens einen Vorgang auszuführen, und wobei das Bedienteil ausgeführt ist, so dass der Vorgang des Einrichtungselementes in Abhängigkeit der Position des Bedienteils ausgeführt wird.

Aus dem Stand der Technik ist es beispielsweise bekannt, dass Kochfelder in Küchen mit Bedienteilen in Form von Drehknöpfen bedient werden. Weitere im Wohnbereich oder in Küchen übliche Einrichtungselemente wie Dunsthauben oder Beleuchtungen sind jeweils mit eigenen Ein- und Ausschaltern verbunden. Die Betätigung all dieser an unterschiedlichen Positionen angeordneter Bedienteile ist aufwändig, abgesehen davon ist die Position von Drehknöpfen von Kochfeldern etc. je nach deren Anordnung mitunter schwer erkennbar.

Aus der WO 2005/038350 A1 ist eine Bedienvorrichtung für ein Kochfeld zur Umsetzung einer Bedienbewegung entlang eines Bedienweges mit Raststufen in ein Bediensignal bekannt, wobei der Bedienweg Bedienstufen oder Bedienarten entspricht, und wobei eine Sensoreinrichtung vorgesehen ist, die die Bewegung des Bedienteils erfasst und in ein Bediensignal umsetzt.

Aus der EP 3 171 233 A1 ist ein Haushaltsgerät mit mindestens einem Steuergeräteträger und einem Prozessor bekannt, der mit dem zu übertragenden Steuergerät verbunden ist und ein Steuersignal empfängt, das entsprechend der Betätigung des Steuergeräts erzeugt wird, wenn das Steuergerät verbunden ist und ein Steuersignal empfängt, das entsprechend der Betätigung des Steuergerätes erzeugt wird, wenn das Steuergerät an dem Controller-Montageteil montiert ist. Der Prozessor kann ein Montagesignal von der Steuerung empfangen, wenn die Steuerung auf dem Controller-Montageteil montiert ist.

Die EP 2 527 747 A1 offenbart eine Vorrichtung zur Bedienung eines Kochfeldes mit wenigstens einer Kochstelle. Die Vorrichtung enthält eine Kochgeschirr-Erfassungseinrichtung, die ausgestaltet ist, um eine Veränderung einer Ausrichtung und/oder Position eines Kochgeschirrs auf einer Kochstelle des Kochfeldes zu erfassen, und eine Steuereinrichtung, die ausgestaltet ist, um wenigstens einen Parameter der jeweiligen Kochstelle in Abhängigkeit von der erfassten Ausrichtungs- und/oder Positionsänderung eines Kochgeschirrs auf dieser Kochstelle einzustellen. Der Benutzer des Kochfeldes kann mit Hilfe dieser Vorrichtung das Kochfeld intuitiv und allein mit dem Kochgeschirr steuern.

Die DE 10 2010 062578 A1 betrifft eine Bedienvorrichtung für ein Hausgerät, mit zumindest einer Anbringzone, auf der ein Bedienelement der Bedienvorrichtung reversibel lösbar positionierbar ist, wobei, das Bedienelement eine eckige Oberseite aufweist, auf welcher ein berührsensitives Bedienfeld ausgebildet ist und/oder zumindest eine Seitenwand aufweist, auf welcher ein berührsensitives Bedienfeld ausgebildet ist.

Der vorliegenden Erfindung liegt daher die Aufgabe zugrunde, ein Einrichtungselement eines Küchenmöbels der eingangs genannten Art dahingehend weiterzubilden, dass dessen Bedienung gegenüber bekannten Lösungen einfacher und flexibler ist.

Diese Aufgabe wird durch ein Küchenmöbel mit den Merkmalen des Anspruchs 1 gelöst.

Danach ist vorgesehen, dass das Bedienteil relativ zu dem Einrichtungselement frei platzierbar ist und dass eine Sensorik vorhanden ist, die wenigstens eine Eigenschaft des Bedienteils erfasst und in Abhängigkeit von dieser Erfassung den Vorgang des Einrichtungselementes ansteuert oder keine Aktion des Einrichtungselementes veranlasst.

Der vorliegenden Erfindung liegt somit der Gedanke zugrunde, das Bedienteil nicht fest an dem Einrichtungselement zu positionieren, sondern relativ zu dem Einrichtungselement frei beweglich und von diesem abnehmbar anzuordnen. Vorzugsweise ist das Bedienteil somit auch nicht über ein Kabel mit dem Einrichtungselement verbunden, sondern steht ausschließlich drahtlos mit der Sensorik in Verbindung, sofern es sich an einer entsprechenden Stelle befindet.

Die Sensorik ist ausgebildet, wenigstens eine Eigenschaft des Bedienteils (wie z.B. dessen Position auf einer Arbeitsplatte oder neben einem Kochfeld) zu erfassen und in Abhängigkeit davon zumindest einen Vorgang des Einrichtungselements, wie z.B. die Einstellung der Temperatur des Kochfeldes, das Ein- oder Ausschalten einer Beleuchtung, eines Wasserzulaufes etc. einzustellen.

Diese Erfassung kann mit jeder beliebigen, vorzugsweise drahtlos arbeitenden geeigneten Technologie erfolgen, wie z.B. LCD-Technik, Magneto-Striktionstechnik oder Hall-Sensorik, Bluetooth, WLAN etc. Dies sind nur Beispiele für mögliche Kommunikationswege zwischen dem Bedienteil und der Sensorik, die die Erfindung nicht beschränken.

Mittels der vorliegenden Erfindung wird die Bedienung des Einrichtungselementes für den Nutzer bequem, übersichtlich und einfach. Insbesondere ist Anordnung des Bedienteils weitgehend flexibel.

Gemäß der Erfindung weist das Einrichtungselement eine z.B. vertikale, horizontale oder schräg verlaufende Fläche in Form einer Arbeitsfläche auf. Dabei handelt es sich um die Arbeitsfläche einer Küche, wie z.B. eine Arbeitsplatte, ein Kochfeld etc. oder um ein Teil von dieser. Das Bedienteil ist erfindungsgemäß auf der Arbeitsfläche positionierbar. Die Arbeitsfläche weist die Sensorik auf, die wenigstens eine Eigenschaft des Bedienteils erfasst, nämlich, welche Fläche des Bedienteils auf der Arbeitsfläche aufliegt.

Vorzugsweise handelt es sich bei dem Bedienteil um einen dreidimensionalen Körper. Dieser kann beispielsweise die Form eines Stabes, wie z.B. eines Zylinders oder eines Quaders, eines Würfels oder einer Pyramide etc. aufweisen. Auch hierbei handelt es sich um nicht beschränkende Beispiele der Erfindung.

Bevorzugt ist es, wenn es sich bei dem Bedienteil um ein nicht magnetisches Material und nicht abschirmendes Teil handelt.

Gemäß der vorliegenden Erfindung weist das Bedienteil mehrere Flächen auf, die sich insoweit unterscheiden, als dass mittels der Sensorik erkannt werden kann, welche Fläche der Sensorik zu- oder abgewandt ist. So kann beispielsweise durch Drehen eines würfelförmigen Bedienteils die Temperatur eines Kochfeldes etc. eingestellt werden.

Denkbar ist es auch, dass das Bedienteil eine Erfassungseinheit aufweist, die ausgebildet ist, zu erfassen, in welcher Position etc. sich das Bedienteil befindet und dies an die Sensorik meldet. In diesem Fall können das Material bzw. die Eigenschaften der Flächen des Bedienteils identisch sein.

Vorzugsweise weist das Einrichtungselement wenigstens einen Bereich auf, der ausgeführt ist, dass die Platzierung des Bedienteils auf diesem Bereich keinen Vorgang des Einrichtungselementes ansteuert. Dieser Bereich stellt somit gleichermaßen eine Parkposition des Bedienteiles dar. Befindet sich das Bedienteil auf diesem Bereich, wird keine Aktion des Einrichtungselementes veranlasst.

Vorzugsweise sind des Weiteren ein oder mehrere Bereiche des Einrichtungselementes vorhanden, die mit einer Sensorik ausgeführt sind. Dies führt dazu, dass bestimmte Aktionen des Einrichtungselementes veranlasst werden, sofern sich das Bedienteil auf dem betreffenden Bereich befindet. So kann ein erster Bereich vorhanden sein, bei dem die Beleuchtung aktiviert wird, sofern sich das Bedienteil auf diesem Bereich befindet. Es kann ein zweiter Bereich vorhanden sein, wobei der Ventilator einer Abzugshaube betätigt wird, wenn sich das Bedienteil auf dem entsprechenden Bereich befindet etc.

Bei der von der Sensorik erfassten Eigenschaft des Bedienteils kann es sich zusätzlich um dessen Drehposition handeln, wobei es sich bei der Drehposition um einen Drehwinkel des Bedienteils um eine beispielsweise senkrecht oder im Winkel auf dem Einrichtungselement stehenden Achse und/oder um eine Drehposition relativ zu einer Achse des Bedienteils selbst, vorzugsweise zu einer Längsachse des Bedienteils handeln kann.

Die von der Sensorik erfasste Eigenschaft des Bedienteiles kann zusätzlich beispielsweise auch dessen Position auf dem Einrichtungselement sein.

Des Weiteren ist es denkbar, dass das Bedienteil ausgebildet ist, dem Nutzer eine haptische Rückmeldung, insbesondere ein Rastgefühl, zu geben, die von dem angesteuerten Vorgang des Einrichtungselementes abhängt. Damit kann der Nutzer erkennen, dass der von ihm angestrebte Vorgang, wie z.B. das Einschalten eines Kochfeldes auch tatsächlich stattgefunden hat. Anstatt einer haptischen Rückmeldung ist auch jede andere Rückmeldung an den Nutzer denkbar, wie z.B. ein optisches oder akustisches Signal.

Das Einrichtungselement kann ein oder mehrere Funktionseinheiten aufweisen, wie z.B. einen Ventilator und ein Leuchtmittel, und das Bedienteil kann ausgebildet sein, nur genau eines oder mehrere der Funktionseinheiten anzusteuern bzw. zu aktivieren. So ist es möglich, dass nur ein Bedienteil benötigt wird, um mehrere Funktionseinheiten anzusteuern. Auch ist es möglich, dass für jede der Funktionseinheiten ein eigenes Bedienteil vorhanden ist.

Denkbar ist es, dass das Bedienteil und/oder die mit diesem zusammenwirkende Sensorik konfigurierbar sind. So können die durch das Bedienteil ausgelösten Vorgänge, wie Wartezeiten, Lichtsteuerung etc. je nach Nutzerwunsch konfiguriert werden.

Denkbar ist es, dass das Bedienteil eine Schnittstelle zu einer Visualisierung und/oder eine Schnittstelle zum Einspielen eines Updates oder einer sonstigen Software aufweist.

Die Sensorik kann ausgebildet sein, die Eigenschaft des Bedienteils stufenlos zu erfassen, wie z.B. eine Drehposition des Bedienteils.

Die Art des Einrichtungselementes und die von diesem vorgenommene Aktion sind beliebig und beschränken die Erfindung nicht.

Nach einer denkbaren Ausführung ist das Einrichtungselement ein Wasserhahn, ein Beleuchtungselement, ein Lüfter, ein Motor, ein elektrischer Verbraucher, eine Anzeige, Mittel zur Abgabe akustischer Signale, eine Schnittstelle, einen Aktor, Mittel zur Erzeugung von Kälte oder Wärme oder ein Kochfeld oder weist eines oder mehrerer der vorgenannten Elemente auf.

In einer bevorzugten Ausführung weist das Bedienteil eine Beschriftung auf, wie z.B. unterschiedliche Temperaturwerte, die so angeordnet ist, dass die Anordnung der Beschriftung mit dem durch das Bedienteil ausgelösten Vorgang korreliert. Der Begriff "Beschriftung" ist weit zu fassen und umfasst beispielsweise Ziffern, Buchstaben, Wörter, Symbole, Piktogramme etc. Die Art der Beschriftung ist ebenfalls beliebig, sie kann beispielsweise analog oder digital sein.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weitere Einzelheiten und Vorteile der Erfindung werden anhand eines in der Zeichnung dargestellten Ausführungsbeispiels näher erläutert.

Es zeigen:
- Figur 1:: eine perspektivische Ansicht einer Arbeitsplatte mit Kochfeld und Bedienteil,
- Figur 2:: eine weitere perspektivische Ansicht einer Arbeitsplatte mit Kochfeld und mehreren Bedienteilen,
- Figur 3:: eine schematische Seiten- oder Schnittansicht und eine schematische perspektivische Ansicht einer Arbeitsplatte mit Bedienteil,
- Figur 4:: perspektivische Ansichten eines Bedienteils in unterschiedlichen Drehpositionen,
- Figur 5:: eine exemplarische Ansicht von Vorgängen, die durch das Bedienteil auslösbar sind.

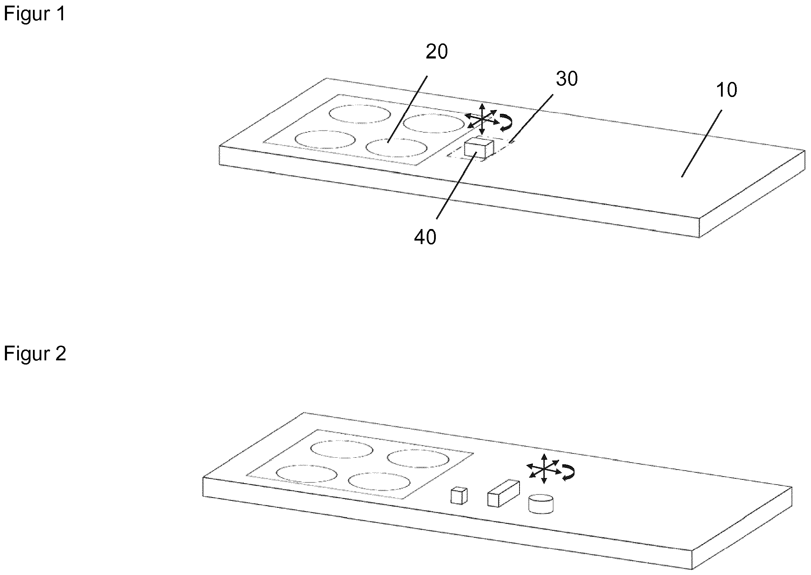

Figur 1 zeigt mit dem Bezugszeichen 10 eine Arbeitsplatte mit einem darin integrierten Kochfeld 20. Neben dem Kochfeld befindet sich in der Arbeitsplatte 10 ein Bereich 30, in dem das Bedienteil 40 liegt.

In dieser Position des Bedienteils 40 veranlasst diese keine Aktion des Kochfeldes, d.h. keine der Platten des Kochfeldes wird aktiviert.

Wird das Bedienteil 40 allerdings aus dem Bereich 30 entnommen und in einen nicht näher gezeigten Bereich verschoben oder in diesen gelegt, veranlasst die mit diesem Bereich verbundene Sensorik eine bestimmte Aktion, z.B. die Erwärmung einer Platte des Kochfeldes.

In Figur 1 ist genau ein Bedienteil vorgesehen, um das gesamte Kochfeld anzusteuern. Die unterschiedlichen Platten können beispielsweise durch eine entsprechende Positionierung des Bedienteils aktiviert werden, eine Temperatureinstellung ist beispielsweise durch eine Drehung des Bedienteils möglich.

Figur 2 zeigt eine Ausführungsform mit drei Bedienteilen, die für die Aktivierung unterschiedlicher Funktionen bzw. Vorgänge des Einrichtungselementes verwendet werden können. So kann beispielsweise mittels eines der Bedienteile das Licht ein- und ausgeschaltet werden, mittels eines weiteren Bedienteiles das Kochfeld aktiviert werden und mittels eines dritten Bedienteils die Kühlung eines Bereiches der Arbeitsplatte aktiviert werden.

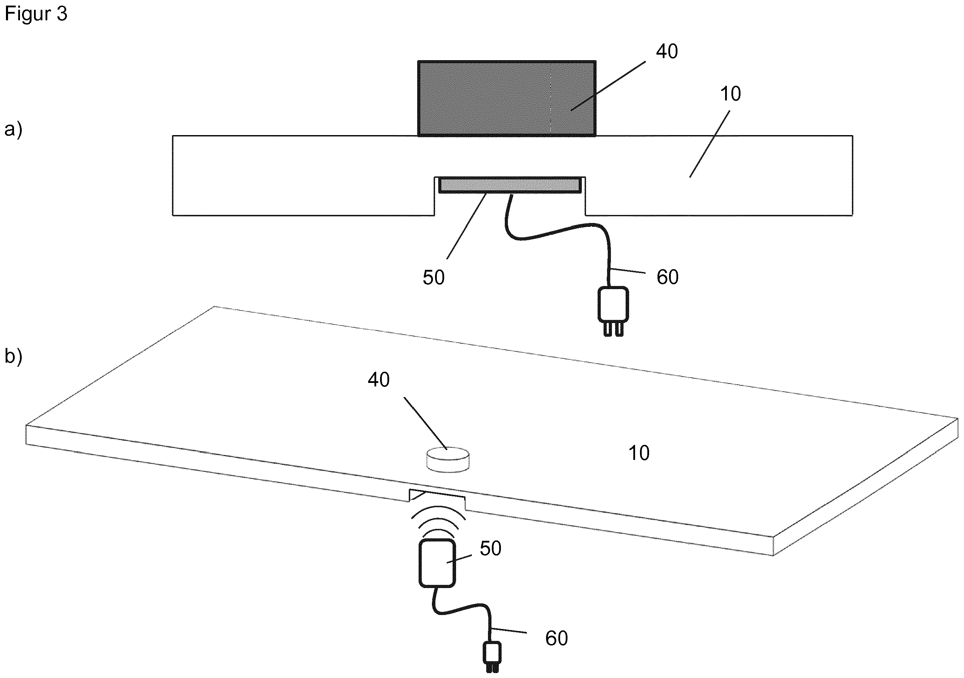

Aus Figur 3 ist ein exemplarischer Aufbau eines Einrichtungselementes im Schnitt bzw. in einer Seitenansicht (Figur 3a)) ersichtlich, Figur 3b) zeigt die Anordnung in einer perspektivischen Ansicht.

Befindet sich das Bedienteil 40 im Bereich einer unterhalb der Arbeitsfläche 10 angeordneten Sensorik 50, wird dies durch die Sensorik erkannt und ein entsprechendes Signal wird über das Kabel 60 an einer Steuerungseinheit oder an eine sonstige Logik übermittelt, so dass die gewünschte Aktion ausgeführt wird.

Wie dies insbesondere aus Figur 3b) hervorgeht, erfolgt die Datenübermittlung, d.h. die Erfassung, ob bzw. an welcher Stelle sich das Bedienteil befindet, drahtlos.

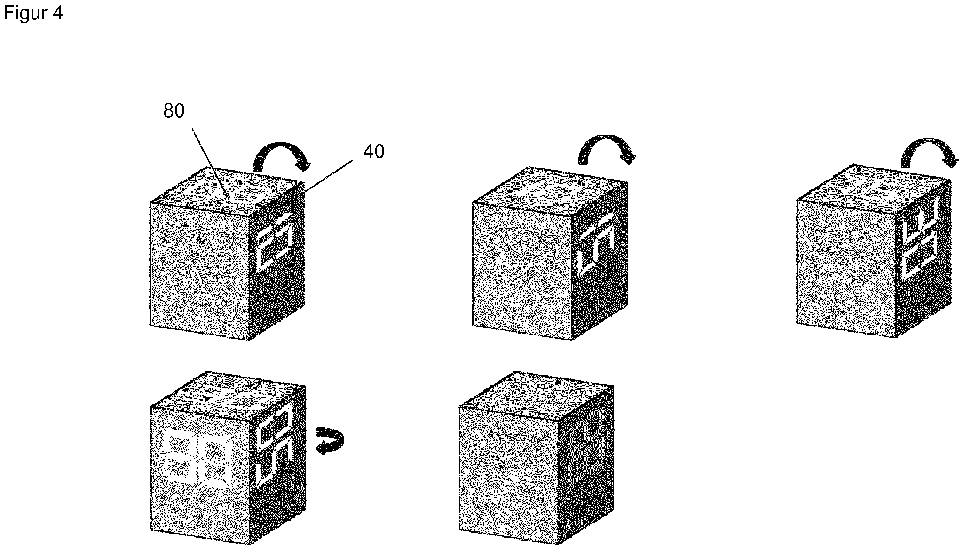

Figur 4 zeigt in einer exemplarischen Ansicht ein Bedienteil 40 in Form eines Würfels. Der Würfel weist abgesehen von einer Seite auf jeder Seite einen Zahlenwert 80 auf. Dabei kann es sich beispielsweise um die Beleuchtungsstärke, eine Temperatur etc. handeln. Der Nutzer dreht den Würfel so, dass der gewünschte Zahlenwert nach oben zeigt, um den Sollwert vorzugeben. Diese Würfelposition wird von der Sensorik erkannt und die Leuchtmittel, das Kochfeld etc. werden dementsprechend angesteuert.

Weist die nicht mit einer Ziffer versehene Seite des Würfels 40 nach oben, wird das Licht, Kochfeld etc. ausgeschaltet.

Dieses Beispiel ist selbstverständlich auf beliebige andere Parameter anwendbar.

Auch ist die Erfindung nicht auf Zahlenwerte beschränkt. Eine entsprechende Ausführung ist auch mit Buchstaben, Worten, Symbolen etc. denkbar und von der Erfindung umfasst.

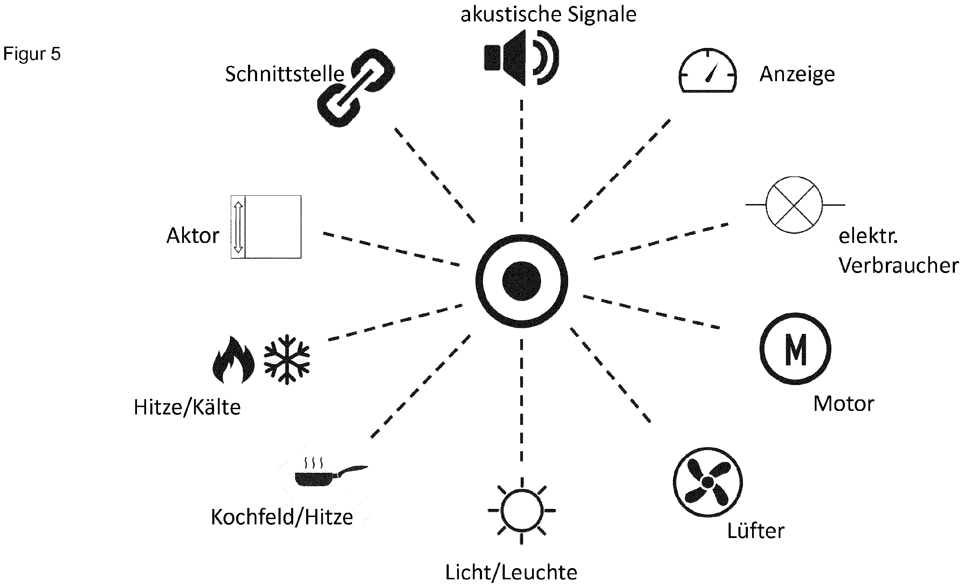

Aus Figur 5 geht eine exemplarische Liste von Funktionen bzw. Vorgängen hervor, die mittels des Bedienteils angesteuert werden können.

In einer denkbaren Ausführungsform sind eines oder mehrere der folgenden Merkmale vorhanden:
- Das Bedienteil ist frei platzierbar, d.h. an jeder Stelle der Arbeitsplatte integrierbar bzw. anzuordnen sein.
- Das Bedienteil soll ein sehr einfaches Teil sein, geeigneter Werkstoff (nicht magnetisch oder abschirmend).
- Das Bedienteil soll universell sein (intelligente Sensorik)
- Das Bedienteil soll abnehmbar sein (Zustand Speicherung)
- Das Bedienteil soll in jeder Winkellage erkannt werden (Funktion beginnt mit der Drehbewegung)
- Das Bedienteil soll funktionsabhängig eine Haptik Rückmeldung geben (Rastgefühl optisch oder keine Rastung)
- Das Bedienteil soll als Dreheingabe funktionieren (beliebige Drehrichtung, Erfassungsbereich 0-360°)
- Das Bedienteil soll eine virtuelle Drehachse haben (Drehzentrum, geringe Reibung) und/oder verschiebbar sein.
- Das Bedienteil soll unterschiedliche Endgeräte ansteuern können
- Das Bedienteil soll konfigurierbar sein (Wartezeiten, Lichtsteuerung etc.)
- Das Bedienteil soll eine Schnittstelle zu einer Visualisierung bieten
- Das Bedienteil soll eine Up-Date Schnittstelle bieten

## Patentansprüche

1. Küchenmöbel mit wenigstens einem Einrichtungselement, wobei das Einrichtungselement eine Arbeitsfläche und ein Bedienteil (40) sowie ein oder mehrere Funktionseinheiten aufweist, wobei das Einrichtungselement ausgeführt ist, wenigstens einen Vorgang auszuführen, und wobei das Bedienteil (40) ausgeführt ist, so dass der Vorgang des Einrichtungselementes in Abhängigkeit der Position des Bedienteils (40) ausgeführt wird, wobei das Bedienteil (40) ausgebildet ist, nur genau eines oder mehrere der Funktionseinheiten anzusteuern und wobei das Bedienteil (40) relativ zu dem Einrichtungselement frei platzierbar ist und dass eine Sensorik (50) vorhanden ist, die wenigstens eine Eigenschaft des Bedienteils (40) erfasst und in Abhängigkeit von dieser Erfassung den Vorgang des Einrichtungselementes ansteuert, **dadurch gekennzeichnet, dass** das Bedienteil (40) auf der Arbeitsfläche positionierbar ist und mehrere Flächen aufweist, die sich insoweit unterscheiden, als dass mittels der Sensorik (50) erkennbar ist, welche Fläche der Sensorik zu- oder abgewandt ist, und die Arbeitsfläche die Sensorik aufweist, die wenigstens eine Eigenschaft des Bedienteils (40) erfasst, nämlich welche Fläche des Bedienteils auf der Arbeitsfläche aufliegt.

2. Küchenmöbel nach Anspruch 1, **dadurch gekennzeichnet, dass** das Bedienteil (40) dreidimensional ist und vorzugsweise die Form eines Würfels, Zylinders oder eines Quaders oder einer Pyramide aufweist.

3. Küchenmöbel nach einem der vorhergehenden Ansprüche, **dadurch gekennzeichnet, dass** das Einrichtungselement wenigstens einen Bereich (30) aufweist, der ausgeführt ist, dass die Platzierung des Bedienteils (40) auf diesem Bereich keinen Vorgang des Einrichtungselementes ansteuert.

4. Küchenmöbel nach einem der vorhergehenden Ansprüche, **dadurch gekennzeichnet, dass** die von der Sensorik (50) erfasste Eigenschaft des Einrichtungselementes dessen Schiebe- oder Drehposition ist, wobei es sich bei der Drehposition um einen Drehwinkel des Bedienteils um eine z.B. senkrecht auf dem Einrichtungselement stehenden Achse und/oder um eine Drehposition relativ zu einer Achse des Bedienteils (40) selbst, vorzugsweise zu einer Längsachse des Bedienteils (40) ist.

5. Küchenmöbel nach einem der vorhergehenden Ansprüche, **dadurch gekennzeichnet, dass** die von der Sensorik (50) erfasste Eigenschaft des Bedienteils (40) dessen Position auf dem Einrichtungselement ist.

6. Küchenmöbel nach einem der vorhergehenden Ansprüche, **dadurch gekennzeichnet, dass** das Bedienteil (40) ausgebildet ist, dem Nutzer eine haptische Rückmeldung, insbesondere ein Rastgefühl, zu geben, die von dem angesteuerten Vorgang des Einrichtungselementes abhängt.

7. Küchenmöbel nach einem der vorhergehenden Ansprüche, **dadurch gekennzeichnet, dass** das Bedienteil (40) und/oder die Sensorik (50) konfigurierbar ist.

8. Küchenmöbel nach einem der vorhergehenden Ansprüche, **dadurch gekennzeichnet, dass** das Bedienteil (40) eine Schnittstelle zu einer Visualisierung und/oder eine Schnittstelle zum Einspielen eines Updates oder einer sonstigen Software aufweist.

9. Küchenmöbel nach einem der vorhergehenden Ansprüche, **dadurch gekennzeichnet, dass** die Sensorik (50) ausgebildet ist, die Eigenschaft des Bedienteils (40) stufenlos zu erfassen.

10. Küchenmöbel nach einem der vorhergehenden Ansprüche, **dadurch gekennzeichnet, dass** die Sensorik (50) ausgeführt ist, die Eigenschaft des Bedienteils (40) drahtlos, vorzugsweise mittels LCD-Technik, Magneto-Striktionsverfahren oder einer vorzugsweise analogen Hall-Sensorik zu erfassen.

11. Küchenmöbel nach einem der vorhergehenden Ansprüche, **dadurch gekennzeichnet, dass** das Einrichtungselement ein Wasserhahn, ein Beleuchtungselement, ein Lüfter, ein Motor, ein elektrischer Verbraucher, eine Anzeige, Mittel zur Abgabe akustischer Signale, eine Schnittstelle, ein Aktor, Mittel zur Erzeugung von Kälte oder Wärme oder ein Kochfeld (20) ist oder eines oder mehrerer der vorgenannten Elemente umfasst.

12. Küchenmöbel nach einem der vorhergehenden Ansprüche, **dadurch gekennzeichnet, dass** das Bedienteil (40) eine Beschriftung umfasst, die so angeordnet ist, dass die Anordnung der Beschriftung mit dem durch das Bedienteil (40) ausgelösten Vorgang korreliert.

## Claims

1. A piece of kitchen furniture having a control element,, wherein the furniture element has a work surface and a control part (40) and one or more functional units, wherein the furniture element is designed to carry out at least one procedure and wherein the control element (40) is designed such that the procedure of the furniture element is carried out in dependence on the position of the control element, wherein the control part (40) is configured to control exactly one or a plurality of the functional units, and wherein the control part (40) is freely positionable relative to the furniture element, and wherein a sensor system (50) is present that detects at least one property of the control element and controls the procedure of the furniture element in dependence on this detection **characterized in that** the control part (40) is positionable on the work surface and has a plurality of surfaces that differ to the extent that it can be recognized by means of the sensor system (50) which surface faces or faces away from the sensor system and the work surface has the sensor system that detects at least one property of the control part (40), namely which surface of the control part lies on the work surface.

2. A piece of kitchen furniture in accordance with claim 1, **characterized in that** the control element (40) is three-dimensional and preferably has the form of a cube, a cylinder, or of a parallelepiped or of a pyramid.

3. A piece of kitchen furniture in accordance with one of the preceding claims, **characterized in that** the furniture element has at least one region (30) that is designed such that the positioning of the control element (40) on this region does not control any procedure of the furniture element.

4. A piece of kitchen furniture in accordance with one of the preceding claims, **characterized in that** the property of the furniture element detected by the sensor system (50) can be its displacement or rotary position, with the rotary position being an angle of rotation of the control element about an axis e.g. perpendicular on the furniture element and/or a rotary position relative to an axis of the control element (40) itself, preferably relative to a longitudinal axis of the control element (40).

5. A piece of kitchen furniture in accordance with one of the preceding claims, **characterized in that** the property of the control element (40) detected by the sensor system (50) is its position on the furniture element.

6. A piece of kitchen furniture in accordance with one of the preceding claims, **characterized in that** the control element (40) is configured to provide the user with haptic feedback, in particular with a switch feel, that depends on the controlled procedure of the furniture element.

7. A piece of kitchen furniture in accordance with one of the preceding claims, **characterized in that** the control element (40) and/or the sensor system (50) is/are configurable.

8. A piece of kitchen furniture in accordance with one of the preceding claims, **characterized in that** the control element (40) has an interface for a visualization and/or an interface for the uploading of an update or of another piece of software.

9. A piece of kitchen furniture in accordance with one of the preceding claims, **characterized in that** the sensor system (50) is configured to continuously detect the property of the control element (40).

10. A piece of kitchen furniture in accordance with one of the preceding claims, **characterized in that** the sensor system (50) is designed to detect the property of the control element (40) wirelessly, preferably by means of LCD technology, magnetostriction methods, or a preferably analog Hall sensor system.

11. A piece of kitchen furniture in accordance with one of the preceding claims, **characterized in that** the furniture element is a faucet, an illumination element, a fan, a motor, an electric consumer, a display, means to output acoustic signals, an interface, an actuator, means to generate cold or heat, or a cooktop (20) or comprises one or more of the aforesaid elements.

12. A piece of kitchen furniture in accordance with one of the preceding claims, **characterized in that** the control element (40) comprises a marking that is arranged such that the arrangement of the marking correlates with the procedure triggered by the control element (40).

## Revendications

1. Meuble de cuisine doté d'au moins un élément d'équipement, l'élément d'équipement présentant un plan de travail et un organe de commande (40) ainsi qu'une ou plusieurs unités fonctionnelles, l'élément d'équipement étant réalisé de façon à exécuter au moins un processus et l'organe de commande (40) étant réalisé de façon que le processus de l'élément d'équipement est exécuté en fonction de la position de l'organe de commande (40), l'organe de commande (40) étant conçu pour activer uniquement exactement une ou plusieurs des unités fonctionnelles et l'organe de commande (40) pouvant être placé librement par rapport à l'élément d'équipement, et en ce qu'un ensemble de capteurs (50) est présent, lequel détecte au moins une propriété de l'organe de commande (40) et active le processus de l'élément d'équipement en fonction de cette détection, **caractérisé en ce que** l'organe de commande (40) peut être positionné sur le plan de travail et présente plusieurs surfaces, qui se différencient les unes des autres dans une telle mesure qu'il est possible, au moyen de l'ensemble de capteurs (50), de reconnaître quelle surface est orientée vers l'ensemble de capteurs ou dans la direction opposée à celui-ci, et le plan de travail présente l'ensemble de capteurs qui détecte au moins une propriété de l'organe de commande (40), à savoir quelle surface de l'organe de commande repose sur le plan de travail.

2. Meuble de cuisine selon la revendication 1, **caractérisé en ce que** l'organe de commande (40) est tridimensionnel et présente de préférence la forme d'un cube, d'un cylindre ou d'un parallélépipède rectangle ou d'une pyramide.

3. Meuble de cuisine selon l'une des revendications précédentes, **caractérisé en ce que** l'élément d'équipement présente au moins une zone (30) qui est réalisée de façon que le placement de l'organe de commande (40) sur cette zone n'active aucun processus de l'élément d'équipement.

4. Meuble de cuisine selon l'une des revendications précédentes, **caractérisé en ce que** la propriété de l'élément d'équipement détectée par l'ensemble de capteurs (50) est sa position en translation ou en rotation, la position en rotation étant un angle de rotation de l'organe de commande autour d'un axe placé par exemple à la verticale perpendiculairement à l'élément d'équipement et/ou une position de rotation par rapport à un axe de l'organe de commande (40) lui-même, de préférence par rapport à un axe longitudinal de l'organe de commande (40).

5. Meuble de cuisine selon l'une des revendications précédentes, **caractérisé en ce que** la propriété de l'organe de commande (40) détectée par l'ensemble de capteurs (50) est sa position sur l'élément d'équipement.

6. Meuble de cuisine selon l'une des revendications précédentes, **caractérisé en ce que** l'organe de commande (40) est conçu pour donner à l'utilisateur un retour haptique, en particulier une sensation d'enclenchement, qui dépend du processus activé de l'élément d'équipement.

7. Meuble de cuisine selon l'une des revendications précédentes, **caractérisé en ce que** l'organe de commande (40) et/ou l'ensemble de capteurs (50) sont configurables.

8. Meuble de cuisine selon l'une des revendications précédentes, **caractérisé en ce que** l'organe de commande (40) présente une interface pour une visualisation et/ou une interface pour le chargement d'une mise à jour ou d'un autre logiciel.

9. Meuble de cuisine selon l'une des revendications précédentes, **caractérisé en ce que** l'ensemble de capteurs (50) est conçu pour détecter la propriété de l'organe de commande (40) en continu.

10. Meuble de cuisine selon l'une des revendications précédentes, **caractérisé en ce que** l'ensemble de capteurs (50) est réalisé de façon à détecter la propriété de l'organe de commande (40) sans fil, de préférence par une technologie à LCD, par un procédé de magnétostriction ou par un ensemble de capteurs à effet Hall de préférence analogique.

11. Meuble de cuisine selon l'une des revendications précédentes, **caractérisé en ce que** l'élément d'équipement est un robinet d'eau, un élément d'éclairage, un ventilateur, un moteur, un consommateur électrique, un affichage, des moyens destinés à la sortie d'un signal sonore, une interface, un actionneur, des moyens destinés à la production de froid ou de chaleur ou une plaque de cuisson (20) ou comprend un ou plusieurs des éléments mentionnés ci-dessus.

12. Meuble de cuisine selon l'une des revendications précédentes, **caractérisé en ce que** l'organe de commande (40) comprend une inscription qui est disposée de telle façon que la disposition de l'inscription est en corrélation avec le processus déclenché par l'organe de commande (40).
